# EUROPEAN PATENT SPECIFICATION

(11) **EP 2 687 310 B1**
(45) Date of publication and mention of the grant of the patent: **07.11.2018**
(21) Application number: 12757115.6
(22) Date of filing: 07.03.2012
(51) Int. Cl.: B23B 27/14, C22C 29/04, B22F 5/00

(54) **CUTTING EDGE-REPLACEABLE CUTTING TOOL**
SCHNEIDEWERKZEUG MIT AUSTAUSCHBARER SCHNEIDEKLINGE
OUTIL DE COUPE À ARÊTE DE COUPE INTERCHANGEABLE

(30) Priority: 15.03.2011 JP 2011057264
(43) Date of publication of application: 22.01.2014
(73) Proprietor: Sumitomo Electric Hardmetal Corp., Itami-shi, Hyogo 664-0016 (JP)
(72) Inventor: HIROSE, Kazuhiro, Itami-shi, Hyogo 664-0016 (JP); TSUDA, Keiichi, Itami-shi, Hyogo 664-0016 (JP)
(74) Representative: Grünecker Patent- und Rechtsanwälte PartG mbB
(86) International application number: PCT/JP2012/055764
(87) International publication number: WO 2012/124559

(56) References cited:
- EP-A1- 0 819 776
- EP-A1- 1 348 779
- EP-A1- 1 739 198
- EP-A1- 2 177 639
- EP-A2- 0 687 744
- JP-A- 4 231 468
- JP-A- 8 150 502
- JP-A- 9 104 943
- JP-A- 2009 006 413
- JP-A- 2009 108 338
- JP-A- 2010 105 099

## Description

### Technical Field

The present invention relates to indexable cutting tools formed of a cermet. In particular, the invention relates to indexable cutting tools having both excellent wear resistance and excellent fracture resistance.

### Background Art

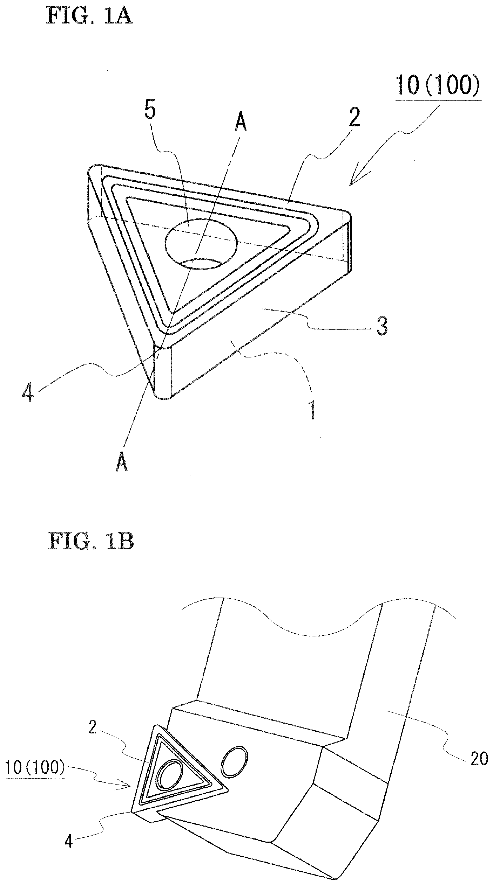

Indexable cutting tools utilized to cut metal materials show trigonal shapes, circular shapes or polygonal shapes such as rhombic, rectangular or hexagonal shapes in plan view. As illustrated in Fig. 1(B), such an indexable cutting tool 10 is fixed to a holder 20 during use. As illustrated in Fig. 1(A), the cutting tool 10 has an abutting face 1 to be in abutting contact with a bearing face of the holder 20, a rake face 2 on the side opposite to the abutting face 1, and a flank face 3 between the abutting face 1 and the rake face 2, and cuts a workpiece with a cutting edge 4 defined at the boundary between the rake face 1 and the flank face 3. Further, the cutting tool 10 has a mounting hole 5 through which a bolt is disposed to mount the cutting tool 10 to the holder 20.

Such indexable cutting tools are required to have little occurrence of wear and chipping during cutting, namely, to be excellent in wear resistance and fracture resistance. Thus, various techniques have been studied in order to improve the wear resistance and the fracture resistance of cutting tools.

For example, Patent Literature 1 discloses a technique in which a binder phase layer substantially composed of a binder phase of an iron group metal is formed on the surface of a cermet cutting tool. According to Patent Literature 1, the binder phase layer formed on the surface of a cutting tool can improve the surface roughness of the cutting tool and can increase the wear resistance and the fracture resistance of the cutting tool.

Patent Literature 2 discloses an indexable cutting tool comprising a cermet comprising 75 to 95 mass % a hard phase including a compound containing at least one element of Ti, W, Mo and Cr and at least one element of N and C, the balance being a binder phase and inevitable impurities, the binder phase containing an iron group metal (Co or Ni) and the indexable cutting tool having a mounting hole and a cutting edge section.

Patent Literature 3 discloses an indexable cutting tool with a binder-enriched surface phase on top of a layer of carbonitride of either vanadium or titanium, coating a WC cermet.

### Citation List

### Patent Literature

PTL 1: Japanese Unexamined Patent Application Publication No. 2005-171283
PTL 2: European Patent Application Publication No. EP2177639
PTL 3: European Patent Application Publication EP1739198

### Summary of Invention

### Technical Problem

However, some types of fractures cannot be suppressed simply by regulating the surface structure of a cutting tool as in the case of the cutting tool disclosed in the above patent literature. For example, cutting of low-carbon steel with the cutting tool of Patent Literature 1 encounters a problem that the binder phase layer based on a binder phase formed on a surface region of the cutting tool easily reacts with Fe that is the main component of the low-carbon steel. The reaction of the binder phase layer and Fe leads to the occurrence of fractures in the cutting tool due to welding, thus resulting in roughness on the finish surface of the workpiece (low-carbon steel).

Indexable cutting tools have another problem in that because the vicinity of a mounting portion of the cutting tool with respect to a holder is subjected to strong stress intermittently in a severe cutting environment such as during intermittent cutting, the mounting portion comes to have fine chipping or to be plastically deformed. The occurrence of such a defect causes wobbling of the cutting edge of the cutting tool, resulting in a "chatter" phenomenon which produces roughness on the machined face of a workpiece as well as resulting in the occurrence of flaws such as chipping at the cutting edge. In particular, cermet cutting tools tend to be poor in toughness relative to their hardness and are likely to suffer chipping at mounting portions.

The present invention has been made in view of the circumstances described above. It is therefore an object of the invention to provide indexable cutting tools formed of a cermet which exhibit excellent wear resistance, fracture resistance and welding resistance in various cutting environments.

### Solution to Problem

An indexable cutting tool according to the present invention includes a cermet including 75 to 95 mass% a hard phase including a compound containing at least one element of Ti, W, Mo and Cr and at least one element of N and C, the balance being a binder phase and inevitable impurities, the binder phase containing an iron group metal. The indexable cutting tool has a mounting hole for mounting the cutting tool to a holder configured to hold the indexable cutting tool, and a cutting edge section defining a cutting edge. The indexable cutting tool of the invention includes a layer of a structure A and a layer of a structure B extending from the inner peripheral face of the mounting hole toward the inside of the cutting tool, and further includes a structure C within the cutting tool beyond the layer of the structure B, the structure C defining an outermost surface portion of the cutting edge section of the cutting tool. Here, the structure A, the structure B and the structure C are as follows.
[Structure A] ··· A structure substantially composed of the binder phase, the binder phase consisting of an iron group element and being substantially free from the hard phase,
[Structure B] ··· A structure composed of TiCN and the binder phase.
[Structure C] ··· A structure composed of the hard phase and the binder phase.

The indexable cutting tools of the present invention exhibit excellent wear resistance, fracture resistance and welding resistance in various cutting environments, for example, during cutting of iron-based workpieces such as low-carbon steel or during intermittent cutting. The reasons for the inventive cutting tools to achieve these excellent properties will be described in detail hereinbelow together with configurations of the indexable cutting tools of the invention.

### 〈Structures〉

Prior to the explanation of respective sections of the indexable cutting tools, details of the structures A to B will be described first.

### 〈〈Structure A〉〉

The structure A is substantially composed of the binder phase, and is formed during the sintering of materials for the indexable cutting tool by controlling the sintering conditions such that a binder phase component exudes from the inside to the outermost surface of the cutting tool. As a result, the structure A is substantially made of the binder phase, namely, an iron group metal. Thus, the hardness of the structure A is lower than those of the structures B and C described below, and the toughness of the structure A is higher than those of the structures B and C.

### 〈〈Structure B〉〉

The structure B is formed immediately below the layer A when the layer A of the structure A is formed on the outermost surface of the indexable cutting tool under controlled sintering conditions, and contains the hard phase in a proportion that is 1/5 to 1/1.1 of the proportion of the hard phase in the structure C described below. Thus, the hardness of the structure B is higher than that of the structure A but is lower than that of the structure C. The toughness of the structure B is lower than that of the structure A but is higher than that of the structure C.

### 〈〈Structure C〉〉

The structure C is formed more inside than the layer A and the layer B when the layers A and B are formed. The proportion of the hard phase in the structure C is approximately equal to the proportion of the hard phase in the entirety of the inventive indexable cutting tool (75 to 95 mass%). This is because the proportion of the layers A and B relative to the entirety of the cutting tool is very low and the substantial portion of the cutting tool is composed of the structure C.

### 〈〈(Summary〉〉

The above characteristics of the structures are summarized as follows.
(Proportion of hard phase) ··· Structure C > Structure B > Structure A (Structure A is substantially free from the hard phase.)
(Hardness) ··· Structure C > Structure B > Structure A
(Toughness) ··· Structure A > Structure B > Structure C

### 〈Configurations of respective sections〉

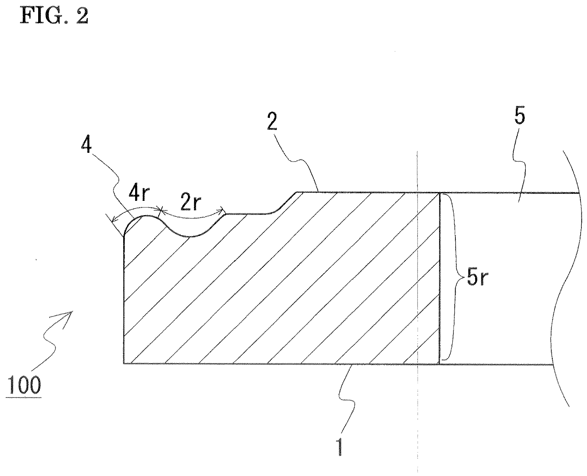

The inventive indexable cutting tool shows an entire shape substantially identical with that of the conventional cutting tool 10 illustrated in Fig. 1, but is distinguished therefrom in terms of the structures of a cutting edge section and an inner peripheral face of a mounting hole. The cutting edge section and the inner peripheral face will be described with reference to Fig. 2, which is a cross sectional view of the cutting tool illustrated in Fig. 1(A) along the line A-A.

### 〈〈Cutting edge section〉〉

As illustrated in Fig. 2, a cutting edge section 4r of an inventive indexable cutting tool 100 defines a cutting edge 4 and is placed in constant contact with a workpiece during cutting. If the outermost surface portion of the cutting edge section 4r is composed of the structure A, the cutting edge section 4r is welded together with a workpiece and the cutting edge section 4r becomes fractured. This is because the structure A is substantially composed of an iron group metal which forms the binder phase, and this iron group metal easily reacts with elements constituting the workpiece. In particular, such a reaction occurs markedly easily in the case where the workpiece is low-carbon steel containing large amounts of iron-based metals. Further, the structure A, which is substantially composed of the binder phase, is poor in hardness, and therefore a cutting edge section 4r composed of the structure A becomes worn easily, possibly failing to cut a workpiece with high accuracy. On the other hand, although the structure B has higher hardness and lower reactivity with a workpiece than the structure A, this structure does not fully qualify to form the cutting edge section 4r. For these reasons, the present invention provides that the cutting edge section 4r that is placed in constant and direct contact with a workpiece is composed of the structure C which has a low content of the binder phase responsible for welding fractures and has sufficient hardness. With this configuration, it becomes possible to effectively prevent the cutting edge section 4r from becoming worn, fractured and welded.

### 〈〈Mounting hole〉〉

A mounting hole 5 of the inventive indexable cutting tool 100 is a portion through which a bolt is disposed to fix the cutting tool 100 to a holder. Thus, strong stress is applied to the bore section of the mounting hole 5 during cutting (in particular, during intermittent cutting). If the bore section of the mounting hole 5 (hereinafter, the inner peripheral face 5r) has high hardness and is brittle, there is a risk that fractures (chipping) occur in the inner peripheral face 5r. If the inner peripheral face 5r has low hardness and exhibits toughness, the inner peripheral face 5r may be plastically deformed. In either case, the seating stability of the cutting tool 100 with respect to the holder is deteriorated, and the cutting tool 100 becomes wobbly during cutting. For these reasons, a layer composed of the structure A (hereinafter, the layer A) and a layer composed of the structure B (hereinafter, the layer B) are formed in the inventive indexable cutting tool 100 so as to extend from the outermost surface of the inner peripheral face 5r toward the inside of the cutting tool. As already described, the structure A substantially composed of the binder phase exhibits toughness and absorbs impacts applied during cutting to reduce the occurrence of fractures in the inner peripheral face 5r. Immediately below the layer A, the layer B is disposed which ensures hardness of the inner peripheral face 5r so as to suppress plastic deformation of the inner peripheral face 5r due to impacts applied during cutting and to suppress a consequent decrease in the seating stability of the cutting tool 100 with respect to the holder. The layer B also functions to absorb impacts applied during cutting and thereby reduce the stress propagating to the structure C.

The average thickness of the layer A is preferably not less than 0.1 µm and less than 2.0 µm. Forming the layer A with an average thickness of not less than 0.1 µm ensures that the layer A effectively absorbs impacts applied during cutting. By forming the layer A with an average thickness of less than 2.0 µm, it is possible to markedly lower the probability that the layer A will be plastically deformed due to impacts applied during cutting. In the event the layer A at the inner peripheral face 5r is plastically deformed, the machining accuracy of the cutting tool 100 is lowered and the cutting edge 4 of the cutting tool 100 may be worn or fractured. In view of this, the average thickness of the layer A is more preferably 0.3 µm to 1.5 µm.

The average thickness of the layer B formed immediately below the layer A is preferably not less than 0.3 µm and less than 6.0 µm. This average thickness of the layer B ensures that the layer B in combination with the layer A absorbs impacts applied during cutting stepwise so as to effectively prevent the occurrence of chipping or fractures in the inner peripheral face 5r as well as to effectively suppress the deformation of the inner peripheral face 5r due to the impacts.

The inside from the inner peripheral face 5r beyond the layer B is composed of the structure C. It is preferable that this portion composed of the structure C have a peak of hardness within a depth of 10 µm from the outermost peripheral face thereof. By configuring the portion composed of the structure C such that the peak of hardness is present within a depth of 10 µm, it becomes possible to improve the wear resistance and the fracture resistance of the cutting tool 100 as compared to other cases. This is because higher hardness in the vicinity of the surface of the cutting tool 10 provides improved wear resistance of the cutting tool 100, and the inner region with a lower hardness than in the vicinity of the surface ensures toughness of the cutting tool 100.

In detail, the peak hardness in the vicinity of the surface is preferably in the range of 18 GPa to 22 GPa in terms of Vickers hardness. With the peak hardness being 18 GPa or more, the cutting tool 100 achieves a marked improvement in wear resistance.
Controlling the peak hardness to 22.0 GPa or less reduces a probability that the hardness in the vicinity of the surface becomes so high that an imbalance is caused in relation to the toughness in the inner region and consequently the cutting tool 100 may be fractured.

### 〈〈Chip disposal section〉〉

In the indexable cutting tool 100, a chip disposal section 2r (a section corresponding to a so-called chip breaker) is generally provided adjacent to the cutting edge section 4r on the rake face 2 side for the disposal of chips from a workpiece. It is preferable that the structure of a surface portion of the chip disposal section 2r be also controlled. Here, the chip disposal section 2r is not the entirety of a chip breaker but is a section involved in cutting (in particular, a section in contact with chips).

For the same reasons as in the cutting edge section 4r, the outermost surface of the chip disposal section 2r is preferably composed of the structure B or the structure C. That is, because the chip disposal section 2r is brought into contact with chips from the workpiece during cutting, welding fractures can occur if the outermost surface of the chip disposal section 2r is composed of the structure A. Another reason why the outermost surface of the chip disposal section 2r is preferably composed of the structure B or the structure C is that the structure A is prone to wear compared to the structure B and the structure C.

Even in the case where the outermost surface of the chip disposal section 2r is the structure A, any particular problems are not caused as long as the thickness of the layer A composed of the structure A is not more than 0.1 µm. This is because when the thickness of the layer A at the chip disposal section 2r is not more than 0.1 µm, such a layer A is unlikely to cause welding fractures during an initial stage of cutting and is simply removed during the continuation of cutting.

### 〈〈Hard coatings〉〉

In an embodiment of the inventive indexable cutting tool 100, the surface of the cutting tool 100 may be covered with at least one layer of hard coating.

By covering the surface of the inventive indexable cutting tool 100 with a hard coating, the wear resistance of the cutting tool 100 can be improved while maintaining the toughness of the cutting tool 100. Further, a hard coating reduces the occurrence of chipping at the cutting edge 4 of the cutting tool 100. Thus, such a cutting tool 100 having a hard coating layer can cut a workpiece to give a machined face exhibiting small surface roughness and having gloss. Here, a hard coating may be formed also on the inner peripheral face 5r of the cutting tool 100.

For example, materials such as TiAIN, TiN, AIN and TiCN may be used as hard coatings. These hard coatings may be formed by gas phase methods such as CVD (chemical vapor deposition) methods and PVD (physical vapor deposition) methods. In general, CVD methods give coating films with tensile stress, and PVD methods produce coating films with compressive stress. The methods for forming such coating films may be selected appropriately in accordance with the applications and materials of the cutting tool 100, as well as materials and shapes of workpieces. For example, a coating film is preferably formed by a PVD method when the cutting tool 100 is used for milling, and is preferably formed by a CVD method when the cutting tool 100 is used for turning.

In the fabrication of the inventive indexable cutting tool 100, first, a material powder is pressed into a green compact and the green compact is sintered under controlled sintering conditions to fabricate a base insert. By controlling the sintering conditions, the resultant base insert includes a layer A composed of the structure A on the outermost surface and a layer B formed immediately below the layer A, the inside beyond the layer B being made of the structure C. In this base insert, the layer A and the layer B present at a portion to define the cutting edge section 4r are removed, thus resulting in an inventive indexable cutting tool 100.

The base insert having the layer A and the layer B may be fabricated under the following sintering conditions. Sintering includes a heating step of increasing the temperature from room temperature to about 1450 to 1600°C, a holding step of holding the increased temperature, and a cooling step of cooling the temperature in the holding step to room temperature stepwise.

The heating step is suitably carried out in such a manner that the temperature is increased to 1300°C in a vacuum atmosphere or a H₂ atmosphere at about 1 to 6000 Pa at a heating rate of 0.5 to 2.0°C/min. In particular, the reduction of the material powder can be accelerated by performing heating in a H₂ atmosphere. Further, the temperature is suitably increased from 1300°C to the holding temperature in a N₂ atmosphere at 100 to 3000 Pa at a heating rate of 0.5 to 1.5°C/min. A denitrification phenomenon takes place at temperatures in the range from 1300°C to 1400°C depending on the material, for example, when TiCN is present. It is therefore desirable to perform sintering in a nitrogen atmosphere in order to control the nitrogen concentration in the cutting tool 100 to be fabricated.

The holding step is suitably carried out in a N₂ atmosphere at 100 to 3000 Pa for about 20 to 60 minutes. The thickness of the layer B tends to be larger with increasing atmospheric pressure and with increasing temperature within the above ranges.

In an embodiment, the temperature may be held in a N₂ atmosphere for the prescribed time and may be thereafter held in a vacuum atmosphere. In such a case,

The cooling step is suitably carried out in an Ar atmosphere at 1000 to 10000 Pa or in a vacuum atmosphere. The higher the atmospheric pressure, the higher the cooling rate. The cooling rate is preferably controlled to be 3 to 25°C/min.

In the cooling step, the temperature may be held at a prescribed temperature for a prescribed time. According to such an embodiment, the thickness of the layer A can be made uniform. Although variable depending on the composition of the cermet, the holding temperature and the holding time are preferably 1100 to 1250°C and 5 to 60 minutes.

Next, there will be described methods for removing the layer A and the layer B at a cutting edge section of a base insert. In order to remove the layer A and the layer B, a brush treatment may be used in which the surface is polished with a brush such as a diamond brush. Alternatively, a blast treatment may be adopted in which fine particles of a medium are allowed to collide with the surface. A brush treatment is preferable because the treatment area can be controlled accurately, although the removal of the layer A and the layer B is slow. Blast treatments have a wet configuration and a dry configuration, with wet blast treatments being particularly preferable. A wet blast treatment is capable of relatively accurate control of the treatment area, and thus can be performed at a desired spot on the cutting tool.

### Advantageous Effects of Invention

According to the indexable cutting tools of the present invention, workpieces can be cut with higher accuracy than heretofore achieved.

### Brief Description of Drawings

[Fig. 1(A)] Figure 1(A) is a schematic perspective view illustrating an indexable cutting tool.
[Fig. 1(B)] Figure 1(B) is a view illustrating the cutting tool of Fig. 1(A) mounted to a holder.
[Fig. 2] Figure 2 is a cross sectional view illustrating an indexable cutting tool of the invention.

### Description of Embodiments

Hereinbelow, embodiments of the present invention will be described.

### 〈EXAMPLE 1〉

First, a material powder having the following composition was provided.

### [Material powder]

WC ··· 22 mass%
TiCN ··· 50 mass%
NbC ··· 10 mass%
Mo₂C ··· 2 mass%
Ni ··· 8 mass%
Co ··· 8 mass%

The material powder was mixed using a cemented carbide ball mill for 24 hours, thereafter dried, granulated and press-compacted. Thus, a plurality of insert-shaped green compacts in accordance with ISO TNMG 160408 were fabricated.

Next, the plurality of insert-shaped green compacts were sintered under different sintering conditions to produce a plurality of base inserts having different configurations of layers A and B. This sintering included a heating step in which the insert-shaped green compacts were heated to 1500°C, a holding step in which the compacts were held at 1500°C for a prescribed time, and a cooling step in which the compacts were cooled from 1500°C to 1250°C, held at 1250°C for a prescribed time, and cooled to room temperature. The conditions in the heating step were identical in the fabrication of all the base inserts, but the holding step and the cooling step were carried out under different conditions. For all the base inserts, the heating step was performed under such conditions that after a binder burn out step, the temperature was increased to 1300°C in a vacuum atmosphere at a heating rate of 2.0°C/min. Heating from 1300°C to the holding temperature was performed in the respective atmospheres identical to the atmospheres in the holding step at a heating rate of 1.5°C/min. Table I describes the conditions in the holding step and the conditions in the cooling step adopted for the fabrication of the respective base inserts.
As described in Table I, base insert c was obtained in such a manner that an insert-shaped green compact was pre-sintered in a vacuum atmosphere at 800°C, the cutting edge section of the pre-sintered compact was brush honed, and the pre-sintered compact was sintered and cooled under conditions similar to those for base insert a.

**[Table I]**

| Base insert | Holding step | | Cooling step | | |
|---|---|---|---|---|---|
| | 1500°C | | 1500∼1250°C | | Kept at 1250°C |
| | Atmosphere | Holding time (min) | Atmosphere | Cooling rate (°C/min) | Holding time (min) |
| a | 1330Pa N₂ | 60 | 2660Pa Ar | 15 | 60 |
| b | 133Pa N₂ | 60 | Vacuum | 3 | 10 |
| c 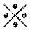 | 1330Pa N₂ | 60 | 2660Pa Ar | 15 | 60 |
| d | 2000Pa N₂ | 40 | 2660Pa Ar | 15 | 10 |
| | Vacuum | 20 | | | |
| e | 66Pa N₂ | 60 | 1330Pa Ar | 10 | 10 |
| f | 100Pa N₂ | 60 | 1330Pa Ar | 10 | 10 |
| g | 500Pa N₂ | 60 | 1330Pa Ar | 10 | 10 |
| h | 2000Pa N₂ | 60 | 1330Pa Ar | 10 | 10 |
| i | 2660Pa N₂ | 60 | 1330Pa Ar | 10 | 10 |

| | | | | | |
|---|---|---|---|---|---|
| 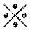 Cutting edge section 4r was brush honed before sintering. | | | | | |

Cross sections of the base inserts fabricated under the conditions described in Table I were observed with a scanning electron microscope (SEM) at x1000 magnification. As a result, it was found that a layer A had been formed so as to cover the outermost surface of the base insert including the inner peripheral face of a mounting hole, that a layer B had been formed immediately below the layer A, and that the inside beyond the layer B was made of a structure C. Thereafter, the average thicknesses of the layer A and the layer B in each of the base inserts were measured. Further, the portions of the base inserts which were composed of the structure C were analyzed to determine the Vickers hardness sequentially from the outermost peripheral side of the portion in the depth direction, thereby determining whether the peak of hardness was present within a depth of 10 µm from the outermost periphery. The Vickers hardness was measured with a micro Vickers hardness meter configured to press a diamond indenter against a cross section of a sample insert with a load of 500 g. The thicknesses of the respective layers and the peak hardnesses are described in Table II.

**[Table II]**

| Base insert | Thickness of structure A (*µ*m) | Thickness of structure B (*µ*m) | Peak hardness (GPa) | Cutting edge treatment |
|---|---|---|---|---|
| a | 1.0 | 4.0 | 20 | Not performed |
| b | 1.0 | 0.1 | 19 | Not performed |
| c | 1.0 | 4.0 | 20 | Performed |
| d | 2.2 | 4.5 | 20 | Not performed |
| e | 1.0 | 0.25 | 18.3 | Not performed |
| f | 1.0 | 0.3 | 19 | Not performed |
| g | 1.0 | 1.0 | 19.5 | Not performed |
| h | 1.0 | 6.0 | 20.5 | Not performed |
| i | 1.0 | 6.5 | 21 | Not performed |

Of the base inserts a to i, the base inserts a to c were processed to fabricate samples 1-1 to 1-9 of inserts 100 (indexable cutting tools). These samples were different from one another in terms of the layer configurations in a cutting edge section 4r, an inner peripheral face 5r and a chip disposal section 2r illustrated in Fig. 2 as well as in terms of layer thickness.

Here, the layer configurations in the cutting edge section 4r were adjusted by brush honing with a diamond brush, and the layer configurations in the chip disposal section 2r and the inner peripheral face 5r were adjusted by a wet blast treatment. The wet blast treatment was performed by spraying water containing alumina beads to the polishing site at a pressure of 0.3 MPa per 1 cm². The configurations in the respective sections of the samples 1-1 to 1-9 are described in Table III.

The samples 1-1 to 1-9 were subjected to cutting tests under the following conditions to evaluate the wear resistance, the fracture resistance and the welding resistance of the samples. The test results are described in Table III.

### [Cutting conditions 1: wear resistance test]

Workpiece: S45C
Cutting speed: 200 m/min
Depth of cut: 1.0 mm
Feed: 0.2 mm/rev
Cutting oil: WET
Cutting time: 30 min
Evaluation criteria: average wear of cutting edge section (mm)

### [Cutting test 2: fracture resistance test]

Workpiece: step workpiece SCM435 with four flutes
Cutting speed: 230 m/min
Depth of cut: 1.0 mm
Feed: 0.2 mm/rev
Cutting oil: WET
Cutting: 30 sec cutting × 8 times
Evaluation criteria: Of the eight cutting operations, the number of cutting operations in which the insert suffered any fractures was determined.

### [Cutting test 3: welding fracture resistance test]

Workpiece: step workpiece SCM415 with four flutes
Cutting speed: 50 m/min
Depth of cut: 1.0 mm
Feed: 0.2 mm/rev
Cutting oil: WET
Cutting: 30 sec cutting × 5 times
Evaluation criteria: Of the five cutting operations, the number of cutting operations in which the insert suffered any fractures was determined.

**[Table III]**

| Sample | Base insert | Surface configurations of sections | | | Cutting tests | | |
|---|---|---|---|---|---|---|---|
| | | Cutting edge section | Chip disposal section | Inner peripheral face of hole | Wear resistance (mm) | Fracture resistance (times) | Welding resistance (times) |
| | | Structure | Structure | Structure | | | |
| 1 - 1 | a | C | C | A | 0.12 | 0 | 0 |
| 1 - 2 | b | C | C | A | 0.11 | 0 | 0 |
| 1 - 3 | a | C | B | A | 0.11 | 0 | 0 |
| 1 - 4 | a | C | A(0.08 *µ*m) | A | 0.12 | 0 | 1 |
| 1 - 5 | a | C | A (0.15 *µ* m) | A | 0.16 | 0 | 2 |
| 1 - 6 | a | C | B | B | 0.13 | 4 | 0 |
| 1 - 7 | a | C | B | C | 0.12 | 7 | 0 |
| 1 - 8 | c | A(1.0 *µ*m) | C | A | 0.28 | 6 | 5 |
| 1 - 9 | c | B(4.0 *µ*m) | C | A | 0.20 | 5 | 3 |

### [Evaluations]

The criterion in determining that wear resistance is good is whether the wear is less than 0.20 mm, and more preferably less than 0.16 µm. The criterion in determining that fracture resistance and welding resistance are good is whether fractures occur in two or less operations, and more preferably in no operations. From these viewpoints, it can be said that good results were obtained in terms of all of wear resistance, fracture resistance and welding resistance with the samples 1-1 to 1-5 in which the surface layer of the cutting edge section 4r was the structure C and the surface layer of the inner peripheral face 5r was the structure A (the structure B and the structure C were sequentially disposed under the structure A). In contrast, the samples 1-6 and 1-7 in which the surface layer of the inner peripheral face 5r was not the structure A were markedly inferior in terms of fracture resistance to the samples 1-1 to 1-5. Further, the samples 1-8 and 1-9 in which the cutting edge section 4r was not the structure C were markedly inferior to the samples 1-1 to 1-5 in terms of all the resistances.

Next, from the comparison of the samples 1-1 to 1-5 with one another which were evaluated to be good in all the resistances, it has been shown that the surface configuration of the chip disposal section 2r affects the welding resistance. It has been demonstrated that welding resistance is slightly lowered when the surface layer of the chip disposal section 2r is the structure A. However, it has been also demonstrated that the effects due to the chip disposal section 2r being composed of the structure A are minor when the thickness of the structure A is not more than 0.1 µm.

### (EXAMPLE 2)

In EXAMPLE 2, the base inserts a, d and e to i described in Table II were tested in order to examine the influences of the layer configuration of the inner peripheral face 5r on wear resistance, fracture resistance and welding resistance.

**[Table IV]**

| Sample | Base insert | Cutting edge section | Chip disposal | | Inner peripheral face of hole | | | | | | |
|---|---|---|---|---|---|---|---|---|---|---|---|
| | | Structure | Structure | Thickness (*µ*m) | Structure | Thickness (*µ*m) | Structure | Thickness (*µ*m) | Wear resistance (mm) | Fracture resistance (times) | Welding resistance (times) |
| 2-1 | a | C | B | 4.0 | A | 0.08 | B | 4.0 | 0.11 | 1 | 0 |
| 2-2 | a | C | B | 4.0 | A | 0.13 | B | 4.0 | 0. 11 | 0 | 0 |
| 2-3 | a | C | B | 4.0 | A | 0.3 | B | 4.0 | 0.11 | 0 | 0 |
| 2-4 | a | C | B | 4.0 | A | 1.0 | B | 4.0 | 0.11 | 0 | 0 |
| 2-5 | d | C | B | 4.0 | A | 1.5 | B | 4.0 | 0.11 | 0 | 0 |
| 2-6 | d | C | B | 4.0 | A | 1.8 | B | 4.0 | 0.13 | 0 | 0 |
| 2-7 | d | C | B | 4.0 | A | 2.2 | B | 4.0 | 0.16 | 0 | 0 |
| 2-8 | e | C | B | 0.25 | A | 1.0 | B | 0.25 | 0.14 | 2 | 0 |
| 2-9 | f | C | B | 0.3 | A | 1.0 | B | 0.3 | 0.13 | 0 | 0 |
| 2-10 | g | C | B | 1.0 | A | 1.0 | B | 1.0 | 0.12 | 0 | 0 |
| 2-11 | h | C | B | 6.0 | A | 1.0 | B | 6.0 | 0.14 | 0 | 1 |
| 2-12 | i | C | B | 6.5 | A | 1.0 | B | 6.5 | 0.17 | 0 | 1 |

### [Evaluations]

From the results described in Table IV, it has been illustrated that the samples in which the thickness of the structure A at the inner peripheral face 5r was from 0.1 µm to less than 2.0 µm and the thickness of the structure B immediately below the structure A was from 0.3 µm to less than 6.0 µm achieved very high resistances to wear, fracture and welding. In contrast, the samples in which any of the thickness of the structure A and the thickness of the structure B was outside the above ranges (the samples 2-1, 2-7, 2-8, and 2-12) were slightly inferior in terms of wear resistance or fracture resistance to the samples satisfying these thicknesses. However, even such inferior samples exhibited far superior wear resistance and fracture resistance to the samples 1-6 to 1-9 in EXAMPLE 1.

Embodiments of the present invention are not limited to those described hereinabove, and appropriate modifications are possible without departing from the scope of the invention, which is defined by the following claims. For example, the composition of the cermet may be changed within the range specified in the present invention.

### Industrial Applicability

The indexable cutting tools according to the present invention can be suitably utilized for the cutting of iron-based workpieces. Further, the inventive indexable cutting tools can be suitably used for the finishing of workpieces.

### Reference Signs List

10, 100 INDEXABLE CUTTING TOOL
1 ABUTTING FACE
2 RAKE FACE 2r CHIP DISPOSAL SECTION
3 FLANK FACE
4 CUTTING EDGE 4r CUTTING EDGE SECTION
5 MOUNTING HOLE 5r INNER PERIPHERAL FACE
20 HOLDER

## Claims

1. An indexable cutting tool (100) comprising a cermet comprising 75 to 95 mass% a hard phase including a compound containing at least one element of Ti, W, Mo and Cr and at least one element of N and C, the balance being a binder phase and inevitable impurities, the binder phase containing an iron group element;
the indexable cutting tool having a mounting hole (5) for mounting the cutting tool to a holder (20) configured to hold the indexable cutting tool, and
a cutting edge section (4r) defining a cutting edge (4);
**characterized in that**
the indexable cutting tool including a layer of a structure A and a layer of a structure B extending from an inner peripheral face (5r) of the mounting hole (5) toward the inside of the cutting tool, and further including a structure C within the cutting tool beyond the layer of the structure B,
the structure A being substantially composed of the binder phase, and the binder phase consisting of an iron group element,
the structure B being composed of TiCN and the binder phase,
the structure C being composed of the hard phase and the binder phase;
the structure C defining an outermost surface portion of the cutting edge section,
the structure A being substantially free from the hard phase.

2. The indexable cutting tool according to claim 1, wherein
the average thickness of the layer of the structure A at the inner peripheral face (5r) is not less than 0.1 µm and less than 2.0 µm, and
the average thickness of the layer of the structure B at the inner peripheral face (5r) is not less than 0.3 µm and less than 6.0 µm.

3. The indexable cutting tool according to claim 1 or 2, wherein
the indexable cutting tool has a chip disposal section (2r) provided adjacent to the cutting edge section (4r) on a rake face (2) side of the cutting tool for the disposal of chips from a workpiece, and
the outermost surface of the chip disposal section (2r) is defined by an outermost surface layer composed of the structure B or the structure C.

4. The indexable cutting tool according to claim 1 or 2, wherein
the indexable cutting tool has a chip disposal section (2r) provided adjacent to the cutting edge section (4r) on a rake face (2) side of the cutting tool for the disposal of chips from a workpiece, and
the outermost surface of the chip disposal section (2r) is defined by an outermost surface layer composed of the structure A, and the thickness of the outermost surface layer is not more than 0.1 µm.

5. The indexable cutting tool according to any one of claims 1 to 4, wherein
the portion of the indexable cutting tool having the structure C has a peak of hardness within a depth of 10 µm from the outermost peripheral face thereof, and
the peak hardness is 18.0 GPa to 22.0 GPa in terms of Vickers hardness.

6. The indexable cutting tool according to any one of claims 1 to 5, wherein a hard coating is disposed so as to cover at least part of a rake face (2) or a flank face (3) of the indexable cutting tool.

## Patentansprüche

1. Wendeschneidwerkzeug (100) mit einem Cermet mit 75 bis 95 Masse-% einer harten Phase, die eine Verbindung aufweist, die mindestens ein Element aus Ti, W, Mo und Cr und mindestens ein Element aus N und C enthält, wobei der Rest eine Bindephase und unvermeidbare Verunreinigungen sind, wobei die Bindephase ein Element der Eisengruppe enthält;
wobei das Wendeschneidwerkzeug eine Befestigungsbohrung (5) zum Befestigen des Schneidwerkzeugs an einem Halter (20) hat, der ausgebildet ist, das Wendeschneidwerkzeug zu halten, und
mit einem Schneidkantenabschnitt (4r), der eine Schneidkante (4) bildet;
**dadurch gekennzeichnet, dass**
das Wendeschneidwerkzeug eine Schicht aus einer Struktur A und eine Schicht aus einer Struktur B aufweist, die von einer Innenrandfläche (5r) der Befestigungsbohrung (5) zum Inneren des Schneidewerkzeugs verlaufen, und ferner mit einer Struktur C in dem Schneidewerkzeug unter der Schicht der Struktur B,
die Struktur A im Wesentlichen aus der Bindephase zusammengesetzt ist und die Bindephase aus einem Element der Eisengruppe besteht,
die Struktur B aus TiCN und der Bindephase zusammengesetzt ist,
die Struktur C aus der harten Phase und der Bindephase zusammengesetzt ist;
die Struktur C einen äußersten Oberflächenbereich des Schneidkantenabschnitts bildet, die Struktur A im Wesentlichen ohne die harte Phase ist.

2. Wendeschneidwerkzeug nach Anspruch 1, wobei
die mittlere Dicke der Schicht der Struktur A an der Innenrandfläche (5r) nicht kleiner als 0,1 µm und kleiner als 2,0 µm ist, und
die mittlere Dicke der Schicht der Struktur B an der Innenrandfläche (5r) nicht kleiner als 0,3 µm und kleiner als 6,0 µm ist.

3. Wendeschneidwerkzeug nach Anspruch 1 oder 2, wobei
das Wendeschneidwerkzeug einen Schneideresteentfernungsabschnitt (2r) aufweist, der benachbart zu dem Schneidkantenabschnitt (4r) auf Seite einer Neigungsfläche (2) des Schneidewerkzeugs zum Abführen von Schneideresten aus einem Werkstück vorgesehen ist, und
die äußerste Fläche des Schneideresteentfernungsabschnitts (2r) durch eine äußerste Oberflächenschicht gebildet ist, die aus der Struktur B oder der Struktur C zusammengesetzt ist.

4. Wendeschneidwerkzeug nach Anspruch 1 oder 2, wobei
das Wendeschneidwerkzeug einen Schneideresteentfernungsabschnitt (2r) hat, der benachbart zu dem Schneidekantenabschnitt (4r) auf Seite einer Neigungsfläche (2) des Schneidewerkzeugs für das Entfernen von Schneideresten aus einem Werkstück vorgesehen ist, und
die äußerste Fläche des Schneideresteentfernungsabschnitts (2r) durch eine äußerste Oberflächenschicht, die aus der Struktur A zusammengesetzt ist, gebildet ist und die Dicke der äußersten Oberflächenschicht nicht größer als 0,1 µm ist.

5. Wendeschneidwerkzeug nach einem der Ansprüche 1 bis 4, wobei
der Teil des Wendeschneidwerkzeugs, der die Struktur C aufweist, einen Höchstwert bezüglich der Härte innerhalb einer Tiefe von 10 µm ausgehend von der äußersten Randfläche hat, und
der Höchstwert bezüglich der Härte 18,0 GPa bis 22,0 GPa, ausgedrückt in Vickers-Härte, beträgt.

6. Wendeschneidwerkzeug nach einem der Ansprüche 1 bis 5, wobei eine harte Beschichtung so angeordnet ist, dass sie mindestens einen Teil einer Neigungsfläche (2) oder einer Flankenfläche (3) des Wendeschneidwerkzeugs bedeckt.

## Revendications

1. Outil de découpe indexable (100) comprenant un cermet comprenant 75 à 95 % en masse d'une phase dure comprenant un composé contenant au moins un élément parmi Ti, W, Mo et Cr et au moins un élément parmi N et C, le reste étant une phase liante et des impuretés inévitables, la phase liante contenant un élément du groupe fer ;
l'outil de découpe indexable ayant un trou de montage (5) pour monter l'outil de découpe sur un support (20) configuré pour supporter l'outil de découpe indexable, et une section de bord de découpe (4r) définissant un bord de découpe (4) ;
**caractérisé en ce que**
l'outil de découpe indexable comprenant une couche d'une structure A et une couche d'une structure B s'étendant depuis une face périphérique intérieure (5r) du trou de montage (5) vers l'intérieur de l'outil de découpe, et comprenant en outre une structure C dans outil de découpe au-delà de la couche de la structure B,
la structure A étant essentiellement composée de la phase liante, et la phase liante étant constituée d'un élément du groupe fer,
la structure B étant constituée de TiCN et de la phase liante,
la structure C étant constituée de la phase dure et de la phase liante ;
la structure C définissant une partie de surface la plus à l'extérieur de la section de bord de découpe,
la structure A étant sensiblement exempte de la phase dure.

2. Outil de découpe indexable selon la revendication 1, dans lequel
l'épaisseur moyenne de la couche de la structure A au niveau de la face périphérique intérieure (5r) n'est pas inférieure à 0,1 µm et inférieure à 2,0 µm, et
l'épaisseur moyenne de la couche de la structure B au niveau de la face périphérique intérieure (5r) n'est pas inférieure à 0,3 µm et inférieure à 6,0 µm.

3. Outil de découpe indexable selon la revendication 1 ou 2, dans lequel
l'outil de découpe indexable comporte une section d'élimination de copeaux (2r) disposée à proximité adjacente de la section de bord de découpe (4r) sur un côté de face de raclage (2) de l'outil de découpe pour l'élimination de copeaux à partir d'une pièce à usiner, et
la surface la plus à l'extérieur de la section d'élimination de copeaux (2r) est définie par une couche de surface la plus à l'extérieur constituée de la structure B ou de la structure C.

4. Outil de découpe indexable selon la revendication 1 ou 2, dans lequel
l'outil de découpe indexable comporte une section d'élimination de copeaux (2r) disposée à proximité adjacente de la section de bord de découpe (4r) sur un côté de face de raclage (2) de l'outil de découpe pour l'élimination de copeaux à partir d'une pièce à usiner, et
la surface la plus à l'extérieur de la section d'élimination de copeaux (2r) est définie par une couche de surface la plus à l'extérieur constituée de la structure A, et l'épaisseur de la couche de surface la plus à l'extérieur n'est pas supérieure à 0,1 µm.

5. Outil de découpe indexable selon l'une quelconque des revendications 1 à 4, dans lequel
la partie de l'outil de découpe indexable ayant la structure C présente un pic de dureté à une profondeur de 10 µm à partir de sa face périphérique la plus à l'extérieur, et
la dureté maximale est de 18,0 GPa à 22,0 GPa en termes de dureté Vickers.

6. Outil de découpe indexable selon l'une quelconque des revendications 1 à 5, dans lequel un revêtement dur est disposé de manière à recouvrir au moins une partie d'une face de raclage (2) ou d'une face de flanc (3) de l'outil de découpe indexable.
